# EUROPEAN PATENT APPLICATION

(11) **EP 4 571 967 A1**
(43) Date of publication of application: **18.06.2025**
(21) Application number: 24219935.4
(22) Date of filing: 13.12.2024
(51) Int. Cl.: H01M 50/204, H01M 50/209, H01M 50/249, H01M 50/262, H01M 50/269, H01M 50/289

(54) **BATTERY ENCLOSURE AND PACK AND METHOD OF ASSEMBLING THE SAME**

(30) Priority: 15.12.2023 US 202318541576
(71) Applicant: PRATT & WHITNEY CANADA CORP., Longueuil, Québec J4G 1A1 (CA)
(72) Inventor: LACHANCE, Pierre-Luc, (01BE5) Longueuil, J4G 1A1 (CA)
(74) Representative: Dehns

(57) **Abstract**

An enclosure for a plurality of battery modules (24) is provided that includes a pair of enclosure trays (52). Each enclosure tray extends lengthwise between a first end wall (54) and a second end wall (56), and extends widthwise between a first lateral side wall (58) and a second lateral side wall (60). Each enclosure tray has a base side (62) that extends between the first and second end walls (52, 56), and between the first and second lateral side walls (58, 60). Each enclosure tray includes an interior compartment defined by the first and second end walls, the first and second lateral side walls (58, 60), and the base side (62). Each enclosure tray includes a plurality of rails (66) that extend lengthwise between the first and second end walls (52, 56) and the second end wall (56) and extend height wise into the interior compartment.

## Description

### BACKGROUND OF THE INVENTION

### 1. Technical Field

The present disclosure relates to battery module strings and to devices for assembling and containing battery module strings.

### 2. Background Information

Large battery packs may be made of a large number of smaller battery modules connected together in series, called battery strings. For connecting the modules together, the string assembly must be flipped over during the assembly process in order to reach other connectors under the battery pack; i.e., electrical connections must be fastened on the top side and on the bottom side of the string. The battery string is not a rigid structure, being assembled only by the electric connectors between the small modules. What is needed is a structure and / or a method that facilitates assembly of the battery string.

### SUMMARY

According to an aspect of the present invention, an enclosure for a plurality of battery modules is provided that includes a pair of enclosure trays. Each enclosure tray extends lengthwise between a first end wall and a second end wall, and extends widthwise between a first lateral side wall and a second lateral side wall. Each enclosure tray has a base side that extends between the first and second end walls, and between the first and second lateral side walls. Each enclosure tray includes an interior compartment defined by the first and second end walls, the first and second lateral side walls, and the base side. Each enclosure tray includes a plurality of rails that extend lengthwise between the first and second end walls and the second end wall and extend height wise into the interior compartment.

In an embodiment of the above, the rails may be configured to couple with battery modules in a manner that supports and aligns battery modules in rows.

In an embodiment according to any of the previous embodiments, the rails may have a quadrilateral cross-sectional geometry.

In an embodiment according to any of the previous embodiments, the plurality of rails may include more than two rails, and the rails in each adjacent pair of rails may be spaced apart from one another by a same separation distance.

In an embodiment according to any of the previous embodiments, the first end wall of each enclosure tray may be defined by a first end panel, and the second end wall of each enclosure tray may be defined by a second end panel.

In an embodiment according to any of the previous embodiments, the first lateral side wall of each enclosure tray may be defined by a first lateral side panel, and the second lateral side wall of each enclosure tray may be defined by a second lateral side panel.

In an embodiment according to any of the previous embodiments, each enclosure tray may include a base panel disposed at the base side, the base panel extending lengthwise between the first and second end panels, and widthwise between the first and second lateral side panels, and the rails may be disposed in contact with the base panel.

In an embodiment according to any of the previous embodiments, the first and second end walls and the first and second lateral side walls may be defined by a plurality of beams and posts.

In an embodiment according to any of the previous embodiments, each enclosure tray of the pair of enclosure trays may be configured the same as the other enclosure tray of the pair of enclosure trays.

In an embodiment according to any of the previous embodiments, each enclosure tray may include a top side opposite the base side, wherein the interior compartment is open at the top side.

In an embodiment according to any of the previous embodiments, the pair of enclosure trays may include a first enclosure tray and a second enclosure tray, and in an assembled form the top side of the first enclosure tray is contiguous with the top side of the second enclosure tray.

In an embodiment according to any of the previous embodiments, the first enclosure tray may include at least one first attachment flange attached to the second lateral side wall of the first enclosure tray, and the second enclosure tray may include at least one second attachment flange attached to the second lateral side wall of the second enclosure tray. In assembled form, the first attachment flange of the first enclosure tray may be contiguous with the first lateral side wall of the second enclosure tray, and the second attachment flange of the second enclosure tray may be contiguous with the first lateral side wall of the first enclosure tray.

According to another aspect of the present invention, a battery pack is provided that includes a battery enclosure and a plurality of battery modules. The battery enclosure has a pair of enclosure trays. Each enclosure tray includes first and second end walls, first and second lateral side walls, a base side that extends between the first and second end walls and between the first and second lateral side walls, an interior sub-compartment defined by the first and second end walls, the first and second lateral side walls, and the base side, a top side, and a plurality of rails. The interior sub-compartment is open at the top side. The rails extend lengthwise between the first and second end walls and extend height wise into the interior sub-compartment. In an assembled form, the battery enclosure includes an interior compartment defined by the sub-compartments of the pair of enclosure trays. The battery modules are disposed within the battery enclosure interior compartment. The battery modules are positionally located within the battery enclosure interior compartment by the rails included with each enclosure tray.

In an embodiment of the above, the rails are configured to couple with battery modules in a manner that supports and aligns battery modules in rows.

In an embodiment according to any of the previous embodiments, the first end wall of each enclosure tray is defined by a first end panel, and the second end wall of each enclosure tray is defined by a second end panel and wherein the first lateral side wall of each enclosure tray is defined by a first lateral side panel, and the second lateral side wall of each enclosure tray is defined by a second lateral side panel and wherein each enclosure tray includes a base panel disposed at the base side, the base panel extending lengthwise between the first end panel and the second end panel, and widthwise between the first lateral side panel and the second lateral side panel, and wherein the rails are disposed in contact with the base panel.

In an embodiment according to any of the previous embodiments, the first end wall, the second end wall, the first lateral side wall, and the second lateral side wall of each enclosure tray are defined by a plurality of beams and posts.

In an embodiment according to any of the previous embodiments, each enclosure tray of the pair of enclosure trays is configured the same as the other enclosure tray of the pair of enclosure trays.

In an embodiment according to any of the previous embodiments, each enclosure tray includes a top side opposite the base side and wherein the pair of enclosure trays includes a first enclosure tray and a second enclosure tray and wherein in an assembled form, the top side of the first enclosure tray is contiguous with the top side of the second enclosure tray.

In an embodiment according to any of the previous embodiments, the first enclosure tray includes at least one first attachment flange attached to the second lateral side wall of the first enclosure tray, and the second enclosure tray includes at least one second attachment flange attached to the second lateral side wall of the second enclosure tray and wherein in the assembled form, the first attachment flange of the first enclosure tray is contiguous with the first lateral side wall of the second enclosure tray, and the second attachment flange of the second enclosure tray is contiguous with the first lateral side wall of the first enclosure tray.

According to another aspect of the present invention, a method of assembling a battery pack is provided that includes providing a battery enclosure having a first enclosure tray and a second enclosure tray. The first and second enclosure trays each include first and second end walls, first and second lateral side walls, a base side, an interior sub-compartment, a top side, and a plurality of rails. The base side extends between the first and second end walls and between the first and second lateral side walls. The interior sub-compartment is defined by the first and second end walls, the first and second lateral side walls, and the base side. The interior sub-compartment is open at the top side. The rails extend lengthwise between the first and second end walls and extend height wise into the interior sub-compartment. In an assembled form, the battery enclosure includes an interior compartment defined collectively by the interior sub-compartments of the first and second enclosure trays. The method further comprising disposing a plurality of battery modules within the first enclosure tray so that a bottom side of each of the battery modules is in communication with the rails of the first enclosure tray. Each battery module has at least one top side electrical connection port and at least one bottom side electrical connection port. The method further comprising electrically connecting the top side electrical connection ports of the plurality of battery modules to one another in series, attaching the second enclosure tray to the first enclosure tray, when the second enclosure tray is gravitationally above the first enclosure tray, rotating the battery enclosure so that the second enclosure tray is gravitationally below the first enclosure tray, removing the first enclosure tray from the second enclosure tray, electrically connecting the bottom side electrical connection ports of the plurality of battery modules to one another in series, and reattaching the first enclosure tray from the second enclosure tray.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic perspective view of a present disclosure battery enclosure embodiment.
FIG. 2 is an exploded perspective view of a present disclosure battery pack embodiment.
FIG. 3 is a diagrammatic illustration of a hybrid-electric propulsion system embodiment.
FIG. 4 is a diagrammatic perspective view of a battery module embodiment.
FIG. 5 diagrammatically illustrates a string of battery modules connected to one another.
FIG. 6 is a diagrammatic perspective view of a present disclosure battery enclosure tray embodiment.
FIG. 6A is a sectional view of the present disclosure battery enclosure tray embodiment shown in FIG. 6, from section line 6A-6A.
FIG. 6B is a diagrammatic view showing battery modules disposed relative to rails of a present disclosure battery enclosure tray embodiment.
FIG. 7 is an exploded perspective view of a present disclosure battery pack embodiment.
FIG. 8 diagrammatically illustrates an embodiment of stack alignment features.
FIG. 9 is a diagrammatic perspective view of a present disclosure battery pack embodiment.
FIG. 10 is a diagrammatic side view of a present disclosure battery pack embodiment mounted in a fixture embodiment.
FIG. 10A is a top view of the present disclosure battery pack embodiment mounted in a fixture embodiment shown in FIG. 10.
FIGS. 11-11D are diagrammatic perspective views illustrating the assembly of a present disclosure battery pack embodiment.
FIG. 12 is a diagrammatic perspective view of a present disclosure battery pack stack.

### DETAILED DESCRIPTION

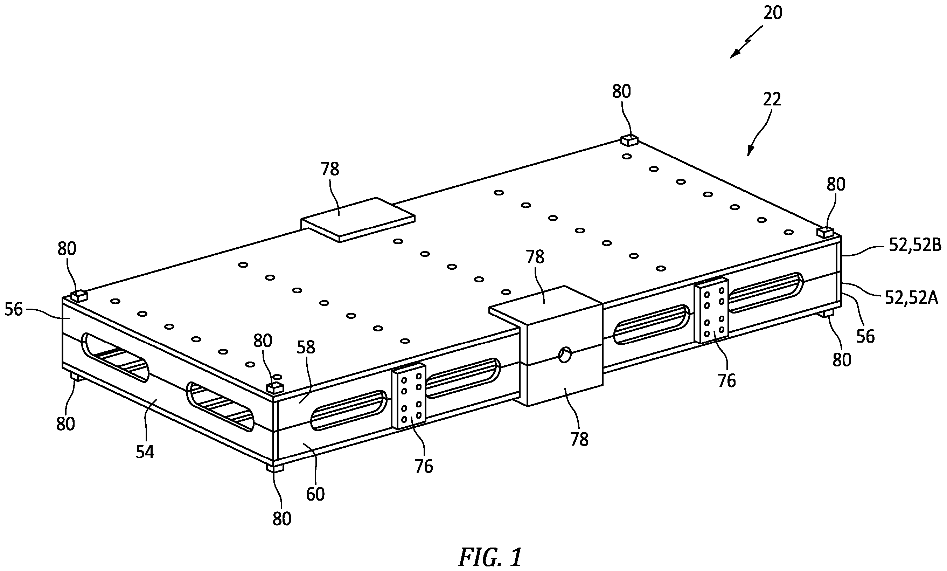

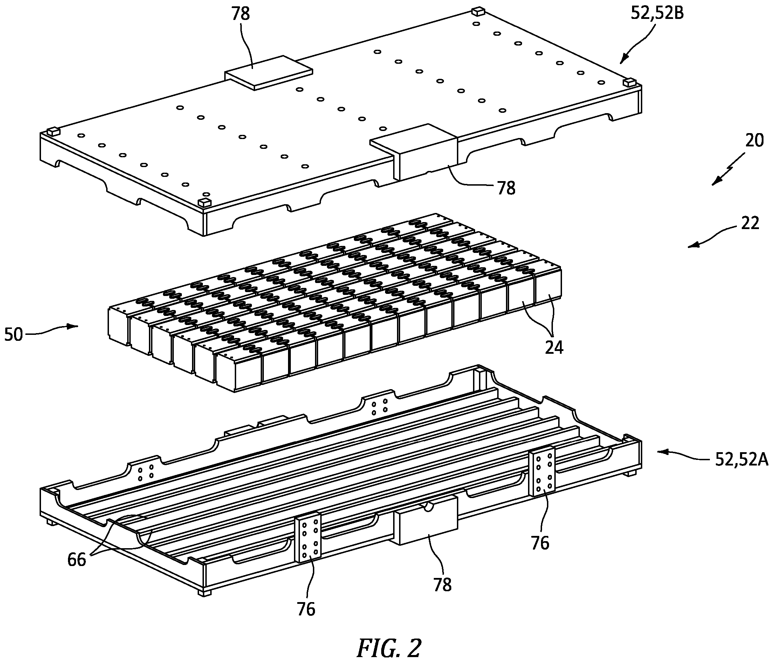

Referring to FIGS. 1 and 2, aspects of the present disclosure are directed to a battery pack 20 that includes a battery enclosure 22 and a plurality of battery modules 24, and more specifically to battery enclosure 22 embodiments. FIG. 2 illustrates a battery pack 20 embodiment in exploded view.

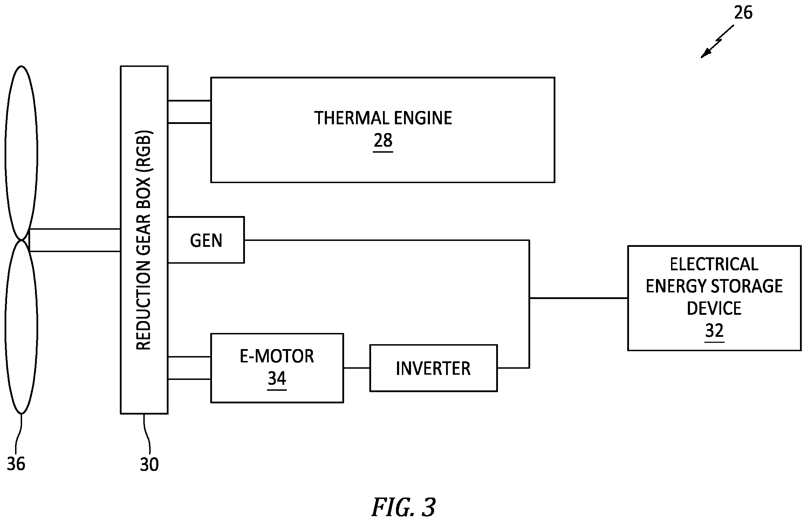

As will be described herein, one or more battery packs 20 may be used to provide electrical energy for a powering a device such as a vehicle, and in particular for powering an aircraft; e.g., manned or unmanned. FIG. 3 diagrammatically illustrates a hybrid-electric propulsion system ("HEP system 26") embodiment that includes a thermal engine 28, a reduction gear box 30, an electrical energy storage device 32 (e.g., including one or more battery strings), an electric motor 34, and a propulsor 36; e.g., a propeller, or a fan blade, or the like. The HEP system 26 is provided to diagrammatically illustrate an example of a propulsion system with which embodiments of the present disclosure may be used. Some embodiments of the present disclosure may be used with an all-electric propulsion system. The present disclosure is not limited to use with any particular type of HEP system or all-electric propulsion system.

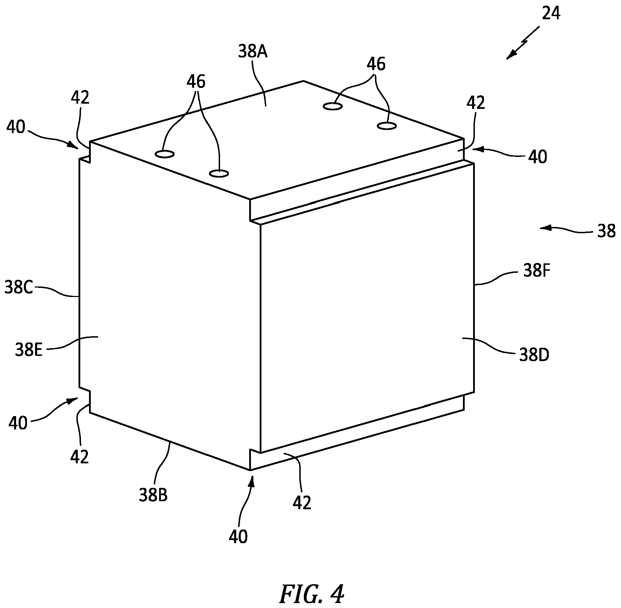

Referring to FIG. 4, each battery module 24 is configured to generate electrical energy from chemical reactions. There are numerous different types of battery modules 24 available, and the present disclosure is not limited to use with any particular type of battery module 24.

Each battery module 24 may be described as having a housing 38 that houses battery cells, plates, and the like. The battery module housing 38 may include a plurality of mounting features 40 that are configured to couple with rails 66 included in the battery enclosure 22 as will be detailed herein.

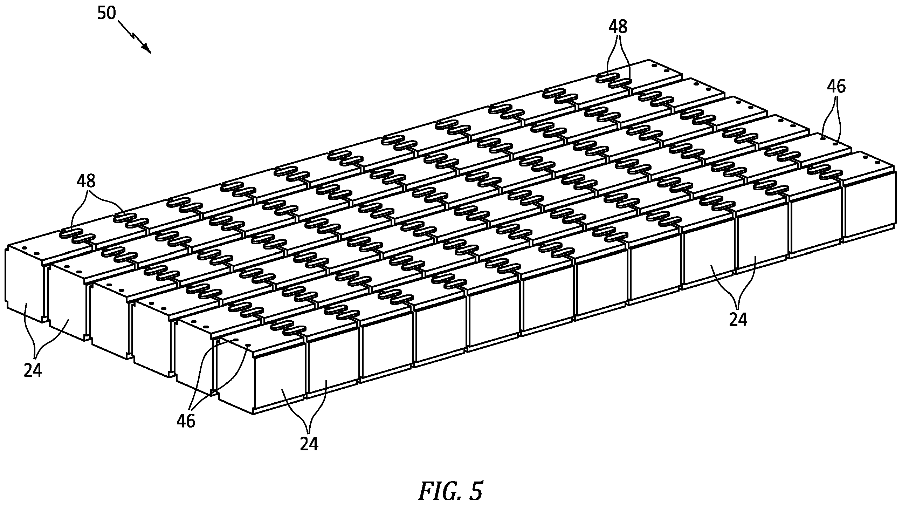

In some embodiments, the battery module housing 38 may be configured as a cuboid; e.g., a six-sided form having a top side 38A, a bottom side 38B, a pair of lateral sides 38C, 38D, a front side 38E, and a back side 38F. The top and bottom sides 38A, 38B are opposite one another, the lateral sides 38C, 38D are opposite one another, and the front and back sides 38E, 38F are opposite one another. In the embodiment shown in FIG. 4, each of the housing sides 38A-F is generally rectangular in shape. The term "cuboid" as used herein is not limited to a form wherein each of the sides is the same size (e.g., a cube). The present disclosure is not limited to use with any particular battery module housing 38 configuration (e.g., not limited to housing sides that are generally rectangular in shape), other than those that can be implemented in the manner described herein. FIG. 5 diagrammatically illustrates a string 50 of battery modules 24 connected to one another.

In the battery module 24 embodiment shown in FIG. 4, a lengthwise extending channel 42 is disposed at each corner between the respective lateral side 38C, 38D and the bottom side 38B, and at each corner between the respective lateral side 38C, 38D and the top side 38A. The aforesaid channels 42 extend between the front and back sides 38E, 38F. Each of these channels 42 is an example of a battery module mounting feature 40 configured to couple with an enclosure rail as will be detailed herein. In the embodiment shown in FIG. 4, the channels 42 are defined by two surfaces that are perpendicular, or are nearly perpendicular one another; e.g., the surfaces form an L-shaped configuration. These channels 42 are non-limiting examples of how a mounting feature 40 may be configured. As another example, a battery housing mounting feature 40 may be an arcuate surface; e.g., a parti-circular configuration. The present disclosure is not limited to any battery housing mounting feature 40 configuration, other than one that may be coupled with an enclosure rail for purposes of locating / positioning the battery module 24 within the enclosure as will be detailed herein.

Each battery module 24 includes one or more electrical connection ports 46 disposed on the bottom side 38B of the battery module housing 38, and one or more electrical connection ports 46 disposed on the top side 38A of the battery module housing 38. The aforesaid connection ports 46 are configured to engage with one or more electrical connection members 48 (e.g., wires, cables, strips, and the like - see FIG. 5) to permit electrical connection between battery modules 24. The battery modules 24 may be connected in a series arrangement that may collectively be referred to as a battery string 50; e.g., see FIG. 5. The present disclosure is not limited to use with any particular size battery string 50 (i.e., number of battery modules 24). As will be clear from the description herein, however, the present disclosure provides considerable utility for those applications wherein the battery string 50 includes a substantial number of battery modules 24; e.g., greater than 10, or 20, or 50, or more - see diagrammatic representation in FIG. 5.

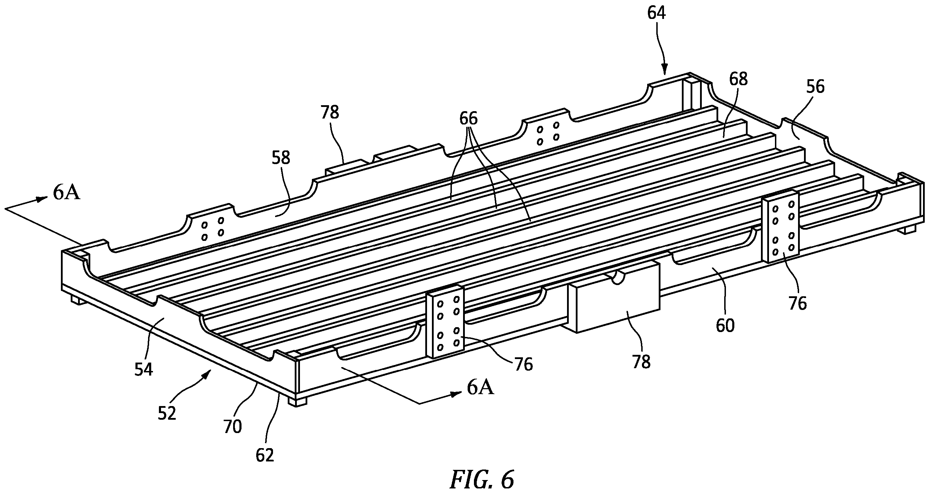

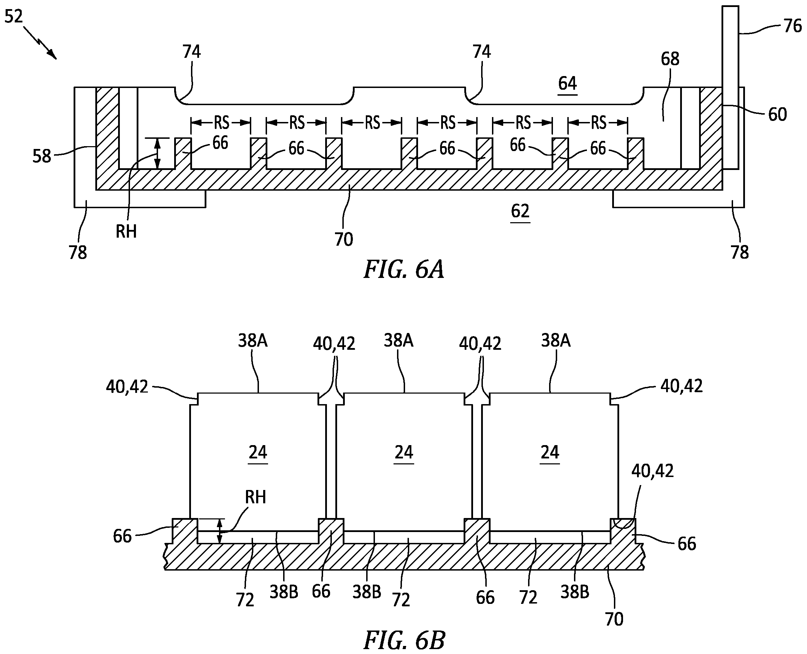

The present disclosure battery enclosure 22 is configured to contain and position the battery modules 24 within a battery string 50. The battery enclosure 22 facilitates making the electrical connections between the battery modules 24 (e.g., on both the top and bottom sides 38A, 38B) and thereby facilitates assembling the battery pack 20. Embodiments of the present disclosure battery enclosure 22 include a pair of enclosure halves (each referred to hereinafter as a "tray 52" - see FIGS. 6-7) that are configured the same and that may be connected with one another to form the battery enclosure 22. The phrase "configured the same" is used herein to disclose that the battery enclosure trays 52 are configured with the same or nearly the same structure and geometry so that one enclosure tray 52 can be coupled with the other (e.g., assembled with the respective top sides 64 contiguous) to produce the enclosure 22. In some embodiments, the enclosure trays 52 may be identical one another. In some embodiments, the enclosure trays 52 may not be identical, but are structurally similar to permit the enclosure trays 52 to be coupled with one another; e.g., assembled with the respective top sides 64 contiguous. Each enclosure tray 52 extends lengthwise (X-axis) between a first end wall 54 and a second end wall 56, and widthwise (Y-axis) between a first lateral side wall 58 and a second lateral side wall 60. Each tray 52 extends height wise (Z-axis) between a base side 62 and a top side 64. Each enclosure tray 52 includes a plurality of rails 66 that extend lengthwise between the first and second end walls 54, 56. The tray 52 structure that forms the first end wall 54, the second end wall 56, and the lateral side walls 58, 60 defines an interior sub-compartment 68 of the tray 52. The top side of the walls are disposed at the top side 64 of the enclosure tray 52, and define the perimeter of the interior sub-compartment 68. The interior sub-compartment 68 for each enclosure tray 52 is open at the top side 64. The rails 66 are disposed adjacent the base side 62 and extend into the interior sub-compartment 68.

FIGS. 1, 2, 6, 6A, and 7 illustrate an embodiment of a present disclosure battery enclosure 22. In this embodiment, each tray 52 has first and second end walls 54, 56 and the first and second lateral side walls 58, 60 are configured as panels. This enclosure tray 52 embodiment may also include a base panel 70 disposed at the base side 62 that extends between the first and second end panels 54, 56 and first and second lateral side panels 58, 60. The end panels 54, 56, the lateral side panels 58, 60, and the base panel 70 may be solid (e.g., continuous material between surfaces) or may comprise a layered structure; e.g., a porous or corrugated structure, or the like disposed between a pair of skin panels. The present disclosure is not limited to any particular panel configuration and some panels may be configured differently than other panels.

In the embodiment shown in FIGS. 1, 2, 6-6B, and 7, the rails 66 may be disposed in contact with the base panel 70, extending height wise into the interior sub-compartment 68. In this embodiment, the rails 66 extend substantially between the first and second end panels 54, 56, or may extend entirely from the first end panel 54 to the second end panel 56, parallel with one another. In those embodiments that include more than two rails 66, the distance ("RS") between adjacent rails 66 may be the same for each set of adjacent rails 66; i.e., the rails 66 may be equidistantly spaced apart - see FIG. 6A. The height ("RH") of the rails 66 may be chosen to create a space 72 between the enclosure base panel 70 and the bottom sides 38B of the battery modules 24; e.g., a space 72 that permits electrical connection members 48 (see FIG. 5) to extend between adjacent battery modules 24 without interference; e.g., see FIG. 6B.

The rails 66 are configured to couple with the battery housing mounting features 40 to support and align battery modules 24 in rows within the enclosure tray 52. For example, the rails 66 and the battery housing mounting features 40 may be configured as mating pairs. In the embodiment shown in FIGS. 1, 2, 6-6B, and 7, the battery module mounting features 40 are shown as L-shaped channels 42 and the rails 66 have a rectangular cross-sectional geometry. In assembled form, a portion of each rail 66 is received within the L-shaped channel 42 of each respective battery module 24 within a particular row. In this manner, the rails 66 and channels 42 form a mating pair structure to support and align battery modules 24 in a row within the tray 52. As stated herein, the battery module housing mounting features and the rails 66 may assume a variety of different configurations that permit coupling / mating therebetween and the present disclosure is not limited to any particular configuration; i.e., L-shaped channels 42 and the rectangular rails 66 are provided as a non-limiting example and other shapes - other quadrilateral rail configurations may be used with mating channels or the like.

In the embodiment shown in FIGS. 1, 2, 6, 6A, and 7, the first and second end panels 54, 56 and the first and second lateral side panels 58, 60 each include a pair of cutouts 74, spaced apart from one another. Each cutout 74 extends into the respective panel 54, 56, 58, 60 and thereby decreases the height of the respective panel at that respective cutout 74. The present disclosure does not require such cutouts 74, and in those embodiments that do include cutouts 74, the present disclosure is not limited to any particular number of cutouts 74 within a respective panel (e.g., may include one or more cutouts 74), or any particular cutout 74 configuration. The cutouts 74 may be configured to facilitate heat transfer (cooling and/or heating) and/or venting of the battery string 50 while disposed within the battery enclosure 22.

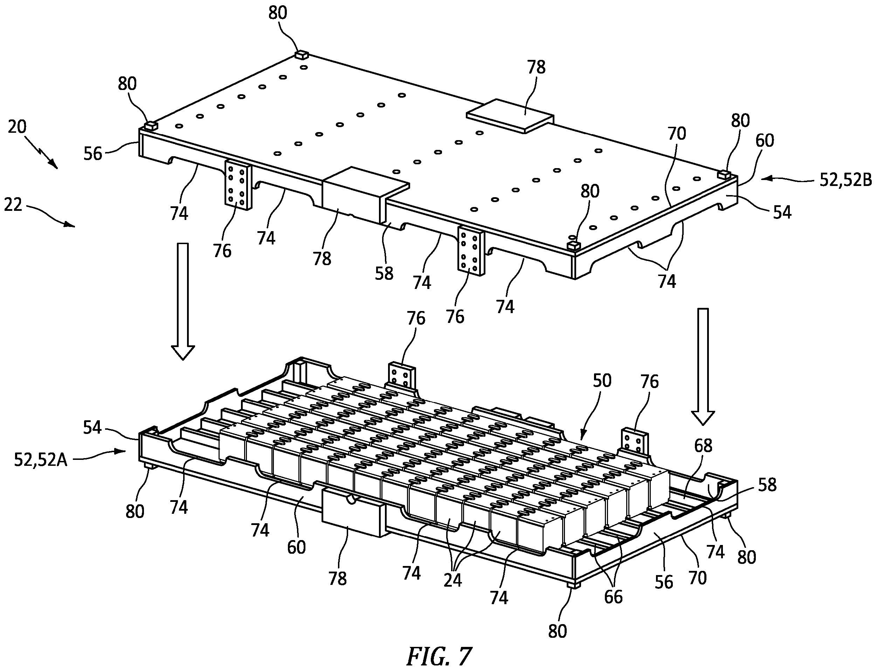

In some embodiments, a tray 52 may include one or more attachment flanges 76 attached to one of the lateral side panels 58, 60. The attachment flanges 76 extend height wise above the lateral side panel 58, 60 to which they are attached. The attachment flanges 76 may include one or more apertures, each aperture for receiving a fastener. When the enclosure trays 52 are combined with one another, the attachment flanges 76 on a first tray 52A are disposed outside a lateral side wall 58, 60 of the second tray 52B, and the attachment flanges 76 on the second tray 52B are disposed outside a lateral side wall 58, 60 of the first tray 52A; e.g., see FIG. 7. In assembled form, therefore, attachment flanges 76 are disposed on each lateral side of the battery enclosure 22. Attachment flanges 76 having a plate-like configuration (e.g., see FIG. 7) are useful; e.g., they facilitate assembly and can function to retain the enclosure trays 52 in the desired orientation relative to one another. The present disclosure does not require attachment plates 76.

In some embodiments, a tray 52 may include a support flange 78 disposed on each lateral side panel 58, 60. In the embodiment shown in FIGS. 1, 2, 6, 6A, and 7, the support flanges 78 are L-shaped having a first leg engaged with respective lateral side panel 58, 60 and a second leg engaged with the base panel 70. As will be detailed herein, the support flanges 78 may be configured for attachment to an assembly fixture; e.g., a rotation stand flange. The L-shaped support flange 78 configuration is an example of an acceptable support flange configuration and the present disclosure is not limited thereto.

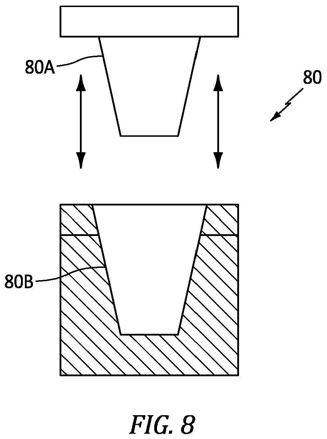

In some embodiments, the battery enclosure tray 52 may include a stack alignment features 80 disposed at each corner of the tray 52; i.e., on the base side of the tray 52, disposed adjacent the intersection of an end panel 54, 56 and a lateral side panel 58, 60. The stack alignment features 80 may include mating male and female features. For example and referring to FIG. 1, a tray 52 may include a pair of male stack alignment features 80 disposed at the corners on one lateral side of the tray 52 and a pair of female stack alignment features 80 disposed at the corners on the opposite lateral side of the tray 52. Embodiments of the present disclosure that include stackable battery enclosures 22, or a stack of battery packs 20, may include the aforesaid stack alignment features 80 to enable the respective battery enclosures 22 / battery packs 20 within a stack to be positionally located relative to one another. FIG. 8 diagrammatically illustrates a non-limiting example of a pair of male and female mating stack alignment features 80. In this example, the when the battery enclosures 22 / battery packs 20 are stacked, the male features (shown as a truncated cone 80A) are received within a cavity 80B having a mating geometry that receives the truncated cone 80A. As stated above, the mating stack alignment features 80 shown in FIG. 8 are an example of an acceptable mating stack alignment feature pair and the present disclosure is not limited thereto.

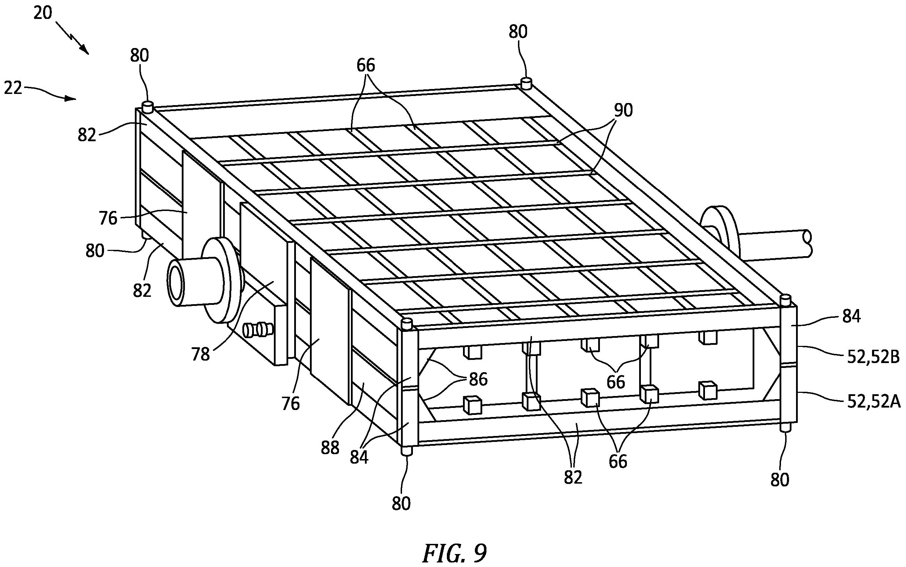

FIG. 9 illustrates another embodiment of a present disclosure battery enclosure 22. In this embodiment, the enclosure tray end walls 54, 56 and the lateral side walls 58, 60 are configured with structural members (e.g., some combination of beams 82 and posts 84) rather than panels. This embodiment may include other structure elements such as flanges 86, plates 88, and the like. In some versions of this embodiment, the tray 52 may include a base panel (not shown) attached to the structural members. This embodiments also includes rails 66 as described above; e.g., extending lengthwise between the first and second ends of the tray 52, and height wise into the interior sub-compartment 68. The rails 66 may be configured as described above; e.g., configured to couple / mate with the battery module housing mounting features 40 and thereby support and align battery modules 24 in a row within the tray 52. In the version shown in FIG. 9, the enclosure trays 52 also includes a plurality of widthwise extending cross-members 90 that extend between the lateral sides and are attached to the rails 66. As can be seen in FIG. 9, this battery enclosure 22 embodiment may also include attachment flanges 76 attached to the lateral sides like those described above to facilitate assembly of the battery enclosure 22 / battery pack 20.

The battery enclosure 22 embodiment shown in FIG. 9 may also include support flanges 78 similar to those described above, disposed on each lateral side panel. In the embodiment shown in FIG. 9, however, the support flange 78 has a planar configuration rather than the L-shaped configuration described above (and shown in FIGS. 1 and 2). In the embodiment shown in FIG. 9, an enclosure tray 52 may include stack alignment features 80 like those described herein and also disposed at each corner of the tray 52.

Numerous benefits are associated with the present disclosure battery enclosure 22. A battery string 50 comprising a substantial number of battery modules 24 is understood to have considerable weight and understood to require a substantial number of electrical connection members 48 (e.g., wires, cables, strips, and the like) on both the top and bottom sides of the battery string 50. Such a battery string 50 is not a rigid structure, being assembled only by the electric connection members 48 between battery modules 24. The present disclosure battery enclosure 22 provides a novel and unobvious structure that greatly facilitates the assembly and handling of a battery string 50, and provides a useful structure for housing the battery string 50 during use.

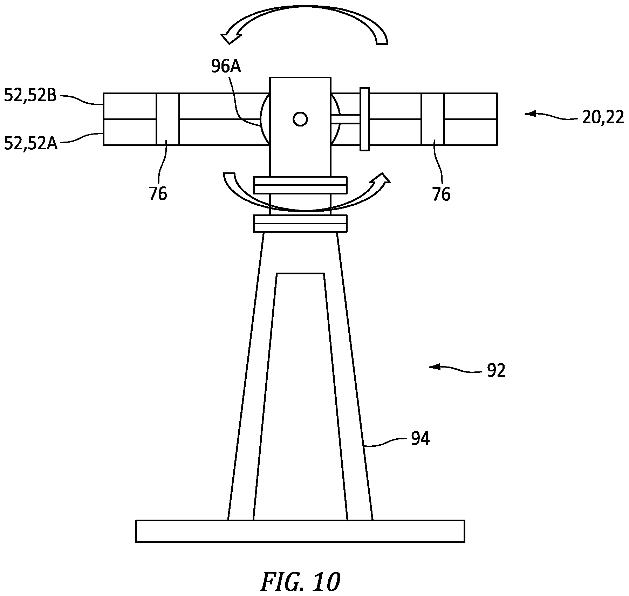

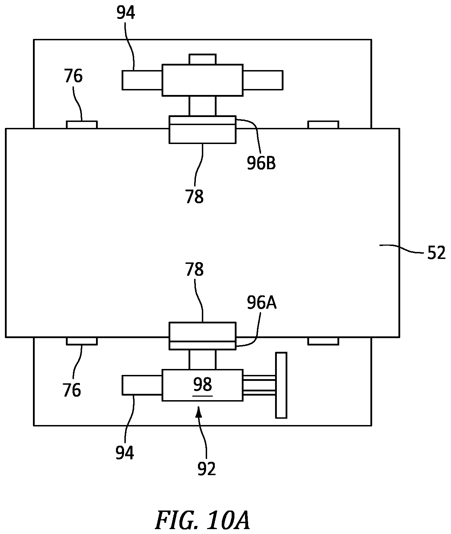

FIGS. 10 and 10A diagrammatically illustrate a present disclosure battery enclosure 22 mounted in a fixture that may be referred to as a tilt table 92. FIG. 10 is a diagrammatic side view of the tilt table 92 and FIG. 10A is a diagrammatic top view of the tilt table 92. The tilt table 92 is configured to hold a battery enclosure tray 52 (e.g., in a horizontal orientation) during assembly, and is configured to permit the same to be rotated during assembly; e.g., one hundred and eighty degrees (180°) of rotation, or as much as three hundred and sixty degrees of rotation (180°). The tilt table 92 embodiment shown in FIGS. 10 and 10A includes a pedestal 94, a pair of mounting flanges 96A, 96B aligned on a rotational axis, and a rotational drive mechanism 98 (e.g., a worm gearbox). The pair of mounting flanges 96A, 96B includes a first mounting flange 96A and a second mounting flange 96B. The first mounting flange 96A is in communication with a rotational axle that is in communication with the rotational drive mechanism 98. The second mounting flange 96B is mounted for free rotation. The tilt table 92 described above is an example of a fixture that may be used with the present disclosure, and the present disclosure is not limited thereto. The present disclosure battery enclosure 22 does not require any type of fixture during assembly.

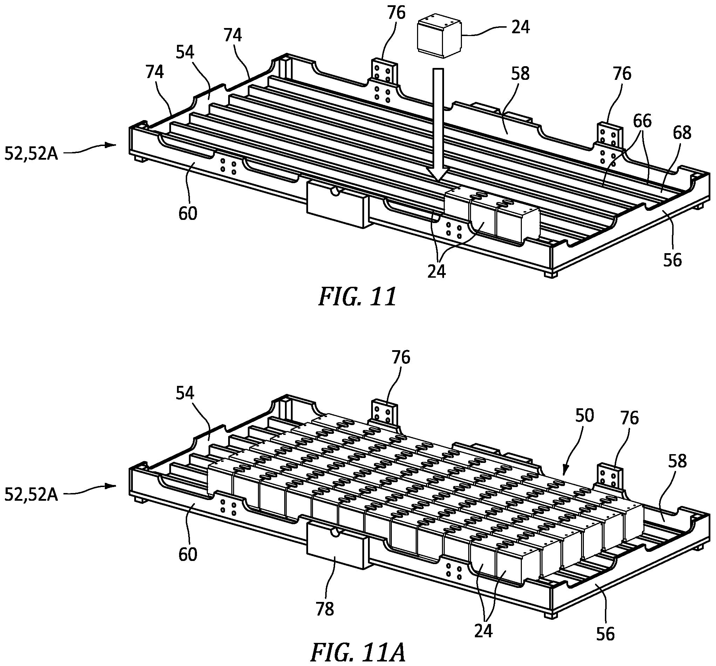

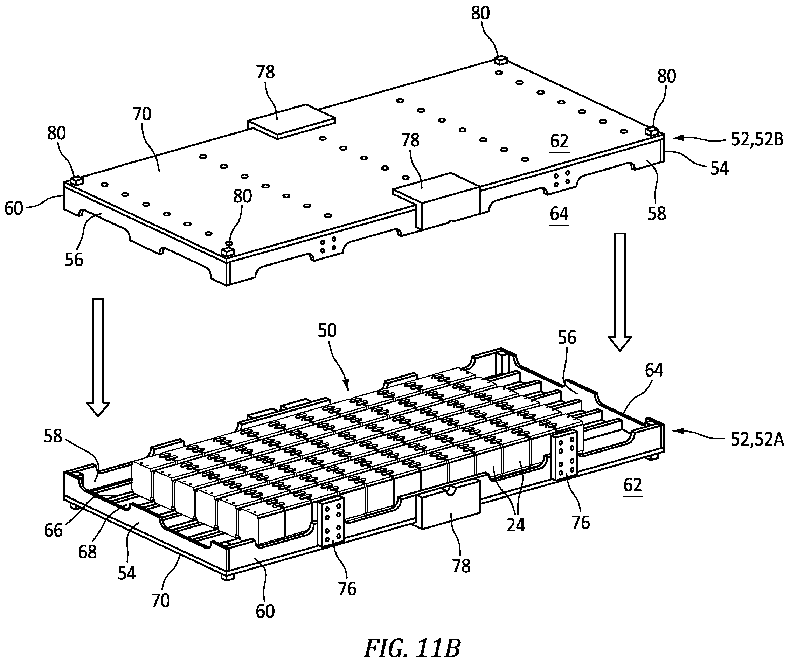

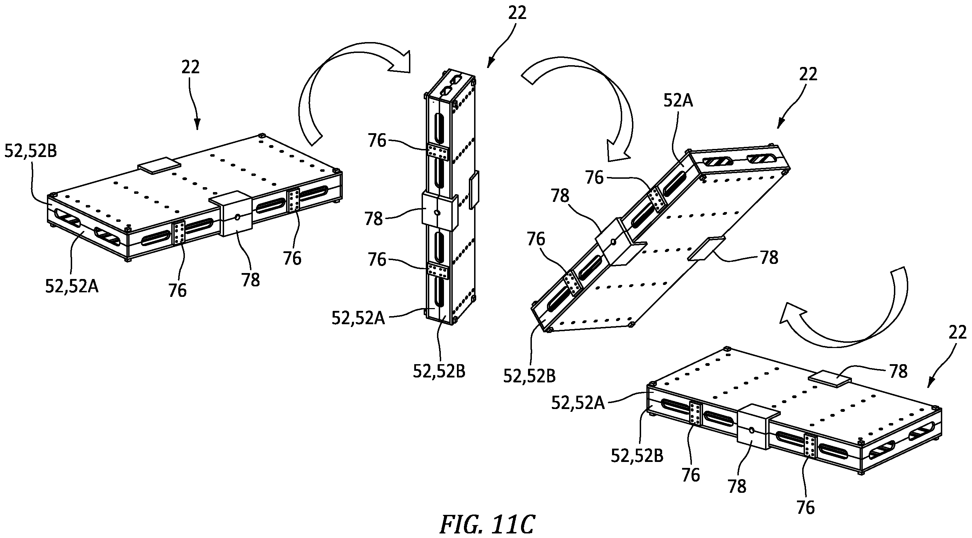

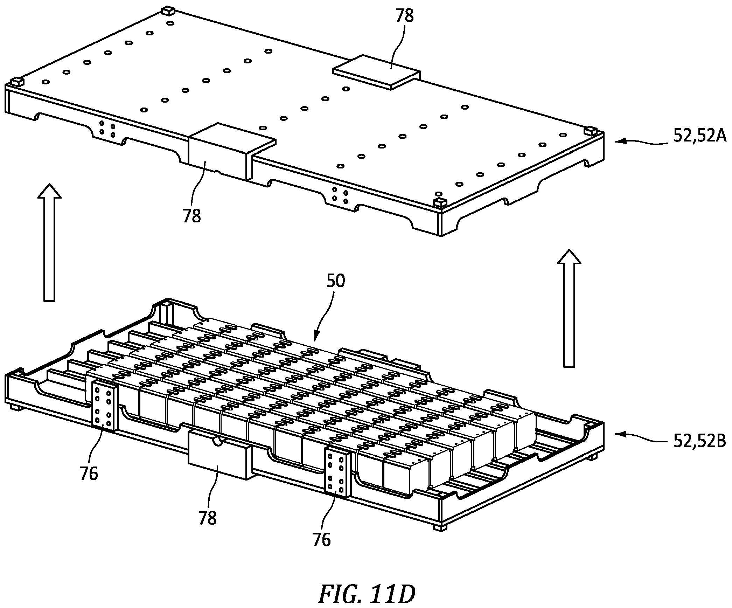

Referring to FIG. 11, an embodiment of a battery enclosure tray 52 is diagrammatically shown, depicting battery modules 24 being loaded into a first battery enclosure tray 52A; i.e., one half of the battery enclosure 22. The battery modules 24 are installed in rows defined by the rails 66. During assembly, the first battery enclosure tray 52A supports and maintains the battery modules 24 in positional alignment; e.g., rows. FIG. 11A diagrammatically illustrates an entire battery string 50 loaded into the first battery enclosure tray 52A. The loaded battery modules 24 are electrically connected to one another in series using electrical connection members. More specifically, the connection ports 46 disposed on the top side 38A of the battery modules 24 are connected to one another in series using the electrical connection members 48. Once all of the battery modules 24 are disposed within the first enclosure tray 52A and the top side connection ports 46 are connected to one another in series, the second enclosure tray 52B is attached to the first enclosure tray 52A; e.g., see FIG. 11B. The battery enclosure 22 is subsequently rotated one hundred and eighty degrees (180°). FIG. 11C diagrammatically illustrates the battery enclosure 22 rotation. Once the battery enclosure 22 has been rotated, the second enclosure tray 52B supports the battery modules 24, and the first enclosure tray 52A may be removed; see FIG. 11D. It should be noted that during the assembly of the battery string 50 in the first enclosure tray 52A, the battery modules 24 are not attached to the first enclosure tray 52A. The structure of the first enclosure tray 52A (e.g., the rails 66) permits assembly without the need to secure the battery modules 24. Once the first enclosure tray 52A is removed, the connection ports 46 disposed on the bottom side 38B of the battery modules 24 are exposed and the battery modules 24 can be readily connected to one another in series using the electrical connection members 48 thereby providing electrical communication between the battery modules 24 within the battery string 50. After the electrical connection ports 46 disposed on the bottom side 38A of the battery modules 24 are electrically connected to one another, the first enclosure tray 52A can be reattached to the second enclosure tray 52B to complete assembly of the battery pack 20. As indicated above, the first and second enclosure trays 52A, 52B of the battery enclosure 22 may be attached to one another using fasteners extending through the attachment flanges 76 affixed to the lateral sides of the battery enclosure 22. The "same configuration" of the battery enclosure trays 52A, 52B creates the desired mating configuration therebetween with attachment flanges 76 disposed on both lateral sides. As stated above, the present disclosure does not require attachment flanges 76. The battery enclosure trays 52A, 52B may be attached to one another by alternative structures such as fasteners, straps, or the like.

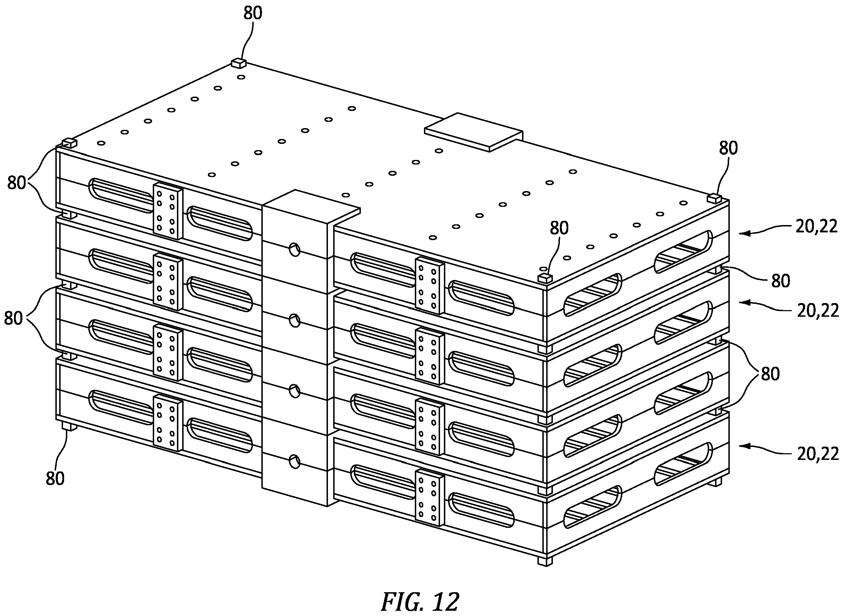

As indicated herein, the present disclosure battery enclosure 22 may be configured to facilitate stacking a plurality of battery enclosures 22 / battery packs 20. FIG. 12 diagrammatically illustrates four (4) battery enclosures 22 disposed in a stacked configuration. A "stack" of battery enclosures 22 may include two or more battery enclosures 22. As indicated herein, battery enclosure trays 52 may include stack alignment features 80 (e.g., mating male and female features) that cooperate to positionally located one battery enclosure 22 relative to another battery enclosure 22. The "same configuration" of the battery enclosure trays 52 permits easy alignment of the mating stack alignment features 80 between adjacent battery enclosures 22. The ability of present disclosure battery enclosures 22 to be disposed in a stack wherein they are positionally located relative to one another is understood to be advantageous during assembly and handling and during use in those applications wherein a stack of battery packs 20 is used to provide electrical energy for a device; e.g., an aircraft.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. An enclosure for a plurality of battery modules, comprising:
a pair of enclosure trays (52), each enclosure tray (52) extending lengthwise between a first end wall (54) and a second end wall (56), and extending widthwise between a first lateral side wall (58) and a second lateral side wall (60), each enclosure tray (52) having a base side (62) that extends between the first end wall (54) and the second end wall (56), and between the first lateral side wall (58) and the second lateral side wall (60);
wherein each enclosure tray (52) includes an interior compartment defined by the first end wall (54) , the second end wall (56), the first lateral side wall (58), the second lateral side wall (60), and the base side (62); and
wherein each enclosure tray (52) includes a plurality of rails (66) that extend lengthwise between the first end wall (54) and the second end wall (56) and extend height wise into the interior compartment.

2. The enclosure of claim 1, wherein the rails (66) are configured to couple with battery modules (24) in a manner that supports and aligns battery modules (24) in rows.

3. The enclosure of claim 1 or 2, wherein the rails (66) have a quadrilateral cross-sectional geometry.

4. The enclosure of any preceding claim, wherein the plurality of rails (66) includes more than two rails (66), and the rails (66) in each adjacent pair of rails (66) are spaced apart from one another by a same separation distance.

5. The enclosure of any preceding claim, wherein the first end wall (54) of each enclosure tray (52) is defined by a first end panel (54), and the second end wall (56) of each enclosure tray (52) is defined by a second end panel (56).

6. The enclosure of any preceding claim, wherein the first lateral side wall (58) of each enclosure tray (52) is defined by a first lateral side panel (58), and the second lateral side wall (60) of each enclosure tray (52) is defined by a second lateral side panel (60).

7. The enclosure of claim 6 when dependent on claim 5, wherein each enclosure tray (52) includes a base panel (70) disposed at the base side (62), the base panel (70) extending lengthwise between the first end panel (54) and the second end panel (56), and widthwise between the first lateral side panel (58) and the second lateral side panel (60), and wherein the rails (66) are disposed in contact with the base panel (70).

8. The enclosure of any preceding claim, wherein the first end wall (54), the second end wall (56), the first lateral side wall (58), and the second lateral side wall (60) of each enclosure tray (52) are defined by a plurality of beams (82) and posts (84).

9. The enclosure of any preceding claim, wherein each enclosure tray (52) of the pair of enclosure trays (52) is configured the same as the other enclosure tray (52) of the pair of enclosure trays (52).

10. The enclosure of any preceding claim, wherein each enclosure tray (52) includes a top side (64) opposite the base side (62), wherein the interior compartment is open at the top side (64).

11. The enclosure of claim 10, wherein the pair of enclosure trays (52) includes a first enclosure tray (52A) and a second enclosure tray (52B), and in an assembled form, the top side (64) of the first enclosure tray (52A) is contiguous with the top side (64) of the second enclosure tray (52B), optionally wherein:
the first enclosure tray (52A) includes at least one first attachment flange (76) attached to the second lateral side wall (60) of the first enclosure tray (52A), and the second enclosure tray (52B) includes at least one second attachment flange (76) attached to the second lateral side wall (60) of the second enclosure tray (52B), and in the assembled form, the first attachment flange (76) of the first enclosure tray (52A) is contiguous with the first lateral side wall (58) of the second enclosure tray (52B), and the second attachment flange (76) of the second enclosure tray (52B) is contiguous with the first lateral side wall (58) of the first enclosure tray (52A).

12. A battery pack, comprising:
a battery enclosure (22) having a pair of enclosure trays (52), wherein each enclosure tray (52) includes:
a first end wall (54) and a second end wall (56);
a first lateral side wall (58) and a second lateral side wall (60);
a base side (62) that extends between the first end wall (54) and the second end wall (56), and between the first lateral side wall (58) and the second lateral side wall (60);
an interior sub-compartment (68) defined by the first end wall (54), the second end wall (56), the first lateral side wall (58), the second lateral side wall (60), and the base side (62);
a top side (64), wherein the interior sub-compartment (68) is open at the top side (64); and
a plurality of rails (66) extending lengthwise between the first end wall (54) and the second end wall (56) and extending height wise into the interior sub-compartment (68), wherein in an assembled form, the battery enclosure (22) includes an interior compartment defined by the sub-compartments of the pair of enclosure trays (52); and
a plurality of battery modules (24) disposed within the interior compartment, the battery modules (24) positionally located within the interior compartment by the plurality of rails (66) included with each enclosure tray (52), optionally wherein:
the rails (66) are configured to couple with battery modules (24) in a manner that supports and aligns battery modules (24) in rows; and/or
the first end wall (54) of each enclosure tray (52) is defined by a first end panel (54), the second end wall (56) of each enclosure tray (52) is defined by a second end panel (56), the first lateral side wall (58) of each enclosure tray (52) is defined by a first lateral side panel (58), the second lateral side wall (60) of each enclosure tray (52) is defined by a second lateral side panel (60), each enclosure tray (52) includes a base panel (70) disposed at the base side (62), the base panel (70) extending lengthwise between the first end panel (54) and the second end panel (56), and widthwise between the first lateral side panel (58) and the second lateral side panel (60), and wherein the rails (66) are disposed in contact with the base panel (70).

13. The battery pack of claim 12, wherein:
the first end wall (54), the second end wall (56), the first lateral side wall (58), and the second lateral side wall (60) of each enclosure tray (52) are defined by a plurality of beams (82) and posts (84); and/or
each enclosure tray (52) of the pair of enclosure trays (52) is configured the same as the other enclosure tray (52) of the pair of enclosure trays (52).

14. The battery pack of claim 12 or 13, wherein each enclosure tray (52) includes a top side (64) opposite the base side (62), the pair of enclosure trays (52) includes a first enclosure tray (52A) and a second enclosure tray (52B), and in an assembled form, the top side (64) of the first enclosure tray (52A) is contiguous with the top side (64) of the second enclosure tray (52B), optionally wherein:
the first enclosure tray (52A) includes at least one first attachment flange (76) attached to the second lateral side wall (60) of the first enclosure tray (52A), the second enclosure tray (52B) includes at least one second attachment flange (76) attached to the second lateral side wall (60) of the second enclosure tray (52B), and in the assembled form, the first attachment flange (76) of the first enclosure tray (52A) is contiguous with the first lateral side wall (58) of the second enclosure tray (52B), and the second attachment flange (76) of the second enclosure tray (52B) is contiguous with the first lateral side wall (58) of the first enclosure tray.

15. A method of assembling a battery pack, comprising:
providing a battery enclosure (22) having a first enclosure tray (52A) and a second enclosure tray (52B), wherein the first enclosure tray (52A) and the second enclosure tray (52B) each includes:
a first end wall (54) and a second end wall (56);
a first lateral side wall (58) and a second lateral side wall (60);
a base side (62) that extends between the first end wall (54) and the second end wall (56), and between the first lateral side wall (58) and the second lateral side wall (60);
an interior sub-compartment (68) defined by the first end wall (54), the second end wall (56), the first lateral side wall (58), the second lateral side wall (60), and the base side (62);
a top side (64), wherein the interior sub-compartment (68) is open at the top side (64); and
a plurality of rails (66) extending lengthwise between the first end wall (54) and the second end wall (56) and extending height wise into the interior sub-compartment (68), wherein in an assembled form, the battery enclosure (22) includes an interior compartment defined collectively by the interior sub-compartment (68) of the first enclosure tray (52A) and the interior sub-compartment (68) of the second enclosure tray (52B);
disposing a plurality of battery modules (24) within the first enclosure tray (52A) so that a bottom side of each of the battery modules (24) is in communication with the rails (66) of the first enclosure tray (52A), wherein each battery module (24) has at least one top side electrical connection port and at least one bottom side electrical connection port;
electrically connecting the top side electrical connection ports (46) of the plurality of battery modules (24) to one another in series;
attaching the second enclosure tray (52B) to the first enclosure tray (52A), when the second enclosure tray (52B) is gravitationally above the first enclosure tray (52A);
rotating the battery enclosure (22) so that the second enclosure tray (52B) is gravitationally below the first enclosure tray (52A);
remove the first enclosure tray (52A) from the second enclosure tray (52B);
electrically connecting the bottom side electrical connection ports (46) of the plurality of battery modules (24) to one another in series; and
reattaching the first enclosure tray (52A) from the second enclosure tray (52B).
